# EUROPÄISCHE PATENTANMELDUNG

(11) **EP 1 233 359 A2**
(43) Veröffentlichungstag der Anmeldung: **21.08.2002**
(21) Anmeldenummer: 02003736.2
(22) Anmeldetag: 19.02.2002
(51) Int. Cl.: G06F 17/60

(54) **Verfahren und Computersystem zur Terminierung von Dienstleistungen**

(30) Priorität: 19.02.2001 DE 10107661
(71) Anmelder: Ahrens, Hans-Joachim, 38855 Wernigerode (DE); Czech, Andreas, 38102 Braunschweig (DE); Knapp, Friedrich, 38124 Braunschweig (DE); Schmitt, Franz, 38106 Braunschweig (DE)
(72) Erfinder: Ahrens, Hans-Joachim, 38855 Wernigerode (DE); Czech, Andreas, 38102 Braunschweig (DE); Knapp, Friedrich, 38124 Braunschweig (DE); Schmitt, Franz, 38106 Braunschweig (DE)
(74) Vertreter: Spitz, Volker, Dr.

(57) **Zusammenfassung**

Die vorliegende Erfindung stellt ein Verfahren zur Terminierung von Dienstleistungen bereit, umfassend Empfangen (12a) von jeweiligen Aufträgen zur Durchführung von Dienstleistungen, Eingeben der empfangenen Aufträge in eine in einem Computersystem (30a) gespeicherte Datenbank und automatisches Terminieren der jeweiligen Dienstleistungen mittels des Computersystems (30a) zur Erzeugung von Termindaten, und Ausgeben (56a) der erzeugten Termindaten von dem Computersystem zur Bereitstellung über ein Mobilfunknetz.

Ferner betrifft die Erfindung entsprechende Computersysteme und Computersystem-Einheiten zur Durchführung des Verfahrens.

Damit ermöglicht die Erfindung, unnötige und lange Wartezeiten zu vermeiden und nötige Wartezeiten sinnvoller zu nutzen, indem der Wartende z.B. seine Position in einer "virtuellen Warteschlange" auf dem Display seines Mobiltelefons ständig überblickt.

## Beschreibung

Die vorliegende Erfindung betrifft ein Verfahren sowie ein Computersystem zur Terminierung von Dienstleistungen. Ferner betrifft die Erfindung die Verwendung eines Computersystems bzw. Computersystemeinheiten zur Durchführung eines derartigen Verfahrens.

Für die Terminierung von Dienstleistungen, d.h. das Festlegen von Terminen, zu denen von Auftraggebern beauftragte Dienstleistungen durchzuführen sind, gewährleistet in vielen Dienstleistungsbereichen eine besonders effiziente, wirtschaftliche und damit zufriedenstellende Durchführung von Dienstleistungen.

Ein Beispiel hierfür ist die telefonische Vereinbarung eines Termins zur Durchführung einer Autoreparatur bei einer Autowerkstatt wie auch die Vereinbarung eines Termins für den Besuch eines Handwerkers in einem Privathaushalt.

Der Begriff "Dienstleistungen" ist im Sinne der Erfindung weit auszulegen und umfaßt insbesondere entgeltliche Dienstleistungen gewerblicher Unternehmen, aber auch beliebige Dienstleistungen, Serviceleistungen oder Tätigkeiten (entgeltlich oder unentgeltlich) beliebiger anderer Unternehmungen, Institutionen, Organisationen oder Personen, insbesondere auch jegliche Dienst- oder Serviceleistungen staatlicher Institutionen jedweder Art.

Die Terminierung ist oftmals mit einem erheblichen Aufwand verbunden. Manche Dienstleister verbringen einen Teil ihrer Zeit damit, eine große Anzahl von Terminierungen durchzuführen und gegebenenfalls bereits festgelegte Termine abzuändern. Insbesondere bei einer Abänderung von in naher Zukunft festgelegten Terminen kommt häufig das Problem hinzu, daß der zur Vereinbarung eines abgeänderten Termins erforderliche Partner (Dienstleister oder Auftraggeber) nicht kurzfristig erreichbar ist. Schließlich gibt es Fälle, in denen die Anwesenheit des Auftraggebers an einem bestimmten Ort von der Auftragsvergabe bis zur Durchführung der Dienstleistung notwendig ist. Beispielhaft sei hier die Person genannt, die in einem Warteraum einer Behörde eine "Wartenummer" zieht und anschließend wartend eine Anzeigetafel beobachtet, auf der die Wartenummer der aktuell durchgeführten Dienstleistung angezeigt wird.

Es ist eine Aufgabe der Erfindung, die Terminierung von Dienstleistungen zu vereinfachen, insbesondere unnötige und lange Wartezeiten für Auftraggeber zu verhindern bzw. eine sinnvollere Nutzung einer Wartezeit für Auftraggeber zu ermöglichen.

Diese Aufgabe wird gelöst durch ein Verfahren nach Anspruch 1, ein Computersystem nach Anspruch 9, Einheiten eines Computersystems nach Anspruch 11 oder 12 bzw. eine Verwendung derartiger Systeme oder Einheiten nach Anspruch 13.

Das erfindungsgemäße Verfahren zur Terminierung von Dienstleistungen umfaßt: Empfangen von jeweiligen Aufträgen zur Durchführung von Dienstleistungen, Eingeben der empfangenen Aufträge in eine in einem Computersystem gespeicherte Datenbank und automatisches Terminieren der jeweiligen Dienstleistungen mittels des Computersystems zur Erzeugung von Termindaten, und Ausgeben der erzeugten Termindaten von dem Computersystem zur Bereitstellung über ein Mobilfunknetz.

Durch das automatische Terminieren der jeweiligen Dienstleistungen, d.h. das Terminieren unter Verwendung eines Computersystems verringert sich der Aufwand seitens des Dienstleisters bzw. desjenigen, der für einen oder mehrere Dienstleister Termine vereinbart. Der Begriff "automatisches Terminieren" schließt hierbei nicht aus, daß eine willentliche Beeinflussung der Terminierung erfolgen kann. Im Gegensatz dazu ist denkbar, daß die Terminierung vollautomatisch erfolgt. Das Ausgeben der Termindaten zur Bereitstellung über ein Mobilfunknetz vereinfacht das Verfahren vor allem für den Auftraggeber, dem auf diese Weise ortsunabhängig und jederzeit Informationen betreffend seinen Termin übermittelt werden können.

Bevorzugt können die Aufträge per Mobilfunknachricht empfangen werden. Ein Auftraggeber kann dann jederzeit und von jedem Ort mittels eines Mobilgeräts, insbesondere mittels eines Mobiltelefons den Auftrag geben und die erzeugten Termindaten auf demselben Mobilgerät empfangen, im Idealfall sehr zeitnah.

Alternativ oder zusätzlich kann bei dem Verfahren vorgesehen sein, daß die Aufträge über das Internet empfangen werden können.

Diese beiden erwähnten Möglichkeiten der Auftragsübermittlung besitzen den Vorteil, daß die Auftragsdaten bereits in elektronischer Form vorliegen, so daß der Verfahrensschritt des Eingebens der empfangenen Aufträge automatisch erfolgen kann. Bei der Auftragsvergabe mittels Mobilfunknachricht besteht darüber hinaus der Vorteil, daß der Auftraggeber in seinen Auftragsdaten die Mobilfunk-Rufnummer zur Bereitstellung der erzeugten Termindaten nicht angeben muß. Vielmehr kann die zu verwendende Mobilfunk-Rufnummer aus der Mobilfunknachricht selbst in automatischer Weise extrahiert werden.

In einer Ausführungsform des Verfahrens erfordert die Durchführung wenigstens eines Teils der Dienstleistungen die Anwesenheit des jeweiligen Auftraggebers am Ort der Dienstleistung. Dies ist beispielsweise der Fall bei der Durchführung einer Autoreparatur, bei der der Auftraggeber sein Auto bei der Autowerkstatt abgibt. Derartige Anwendungsgebiete sind insofern besonders interessant, da der Auftraggeber durch die "mobile Versorgung" mit den Termindaten die Wartezeit sinnvoll nutzen kann, ohne Gefahr zu laufen, den Termin zu versäumen.

Bevorzugt berücksichtigt die Terminierung die zeitliche Reihenfolge der Empfänge der Aufträge. Beispielsweise kann die Terminierung vollautomatisch derart vorgesehen sein, daß Termine entsprechend dieser Eingangsreihenfolge festgelegt werden.

In einer weiteren Ausführungsform läßt sich die Terminierung beeinflussen. Die Möglichkeit der Beeinflussung kann sowohl durch den Betreiber des Computersystems (den Dienstleister) als auch durch den Auftraggeber vorgesehen sein. Der Dienstleister kann beispielsweise die Terminierung durch Vorgabe der zur Durchführung der Dienstleistungen notwendigen Zeiten beeinflussen. In diesem Fall ist bevorzugt, daß diese Zeiten voreingestellt werden, so daß die Terminierung unter Berücksichtigung einer derartigen Voreinstellung erfolgen kann. Diese Voreinstellungen betreffen dann Terminierungen für zukünftig eingehende Aufträge. Alternativ oder zusätzlich kanh die Terminierung auch nachträglich beeinflußbar sein, wobei im Falle einer Änderung eines Termins vorgesehen sein kann, daß die Änderung von dem betroffenen Partner (z.B. Dienstleister oder Auftraggeber) zu bestätigen ist.

Bevorzugt enthalten die Termindaten wenigstens die voraussichtlichen Wartezeiten, d.h. die bis zur Durchführung der Dienstleistung verbleibende Zeit. Alternativ oder zusätzlich können die Termindaten auch die Termine selbst und/oder die Positionen innerhalb einer "virtuellen Warteschlange" enthalten. Auch können die Termindaten Angebote zur Änderung von Terminen enthalten, beispielsweise das Angebot, in der virtuellen Warteschlange eine Position nach vorne zu rücken. Bevorzugt kann der angesprochene Auftraggeber ein derartiges Angebot lediglich innerhalb einer vorgegebenen Zeit annehmen. Wenn die Annahme des Angebots nicht innerhalb dieser Zeit erfolgt, kann dieses Terminangebot einem in der virtuellen Warteschlange weiter hinten stehenden Auftraggeber übermittelt werden. Ein Angebot zur Vorverlegung eines Termins ist beispielsweise sinnvoll, wenn eine Dienstleistung nicht zum vereinbarten Termin durchgeführt werden kann, beispielsweise wenn ein Auftraggeber nicht erschienen ist. Anstatt in einem derartigen Fall das oben erwähnte Angebot zur Terminvorverlegung zu übermitteln, kann in einer Alternative im Rahmen der Terminierung das automatische Vorverlegen sämtlicher nachfolgender Termine erfolgen.

Bevorzugt werden die Termindaten als Mobilfunknachricht unter Verwendung von Mobilfunkrufnummern der Auftraggeber bereitgestellt. Als Mobilfunknachricht ist hierbei jede Art über ein Mobilfunknetz in elektronischer Form übermittelte Information anzusehen, beispielsweise eine sogenannte SMS (short message service)-Nachricht. Davon umfaßt sind jedoch auch Mobilfunknachrichten nach zukünftigen Mobilfunk-Standards (GPRS, UMTS, etc.). Die Mobilfunknachricht kann hierbei z.B. Textelemente und/oder Graphikelemente umfassen.

Ein zur Durchführung des erfindungsgemäßen Verfahrens geeignetes Computersystem kann eine verteilte Struktur dergestalt besitzen, daß in einer zentralen Einheit die auszugebenden Termindaten gespeichert sind und in einer Mehrzahl von angeschlossenen Einheiten die Terminierung der Dienstleistungen erfolgt. Dies ermöglicht es vor allem "kleinen" Dienstleistern, sich selbst sowie ihren Auftraggebern alle Vorteile des erfindungsgemäßen Verfahrens zu verschaffen, ohne hierfür ein aufwendiges Computersystem zu betreiben. Vielmehr genügt seitens der einzelnen Dienstleister eine vergleichsweise einfache angeschlossene Einheit (z.B. ein Computer mit Internet-Anbindung an die zentrale Einheit), in der lediglich die sie selbst betreffenden Terminierungen durchführt und an die zentrale Einheit übermittelt werden. Die zentrale Einheit schafft dann für eine Mehrzahl von Dienstleistern eine gemeinsame Schnittstelle zu den Auftraggebern.

Bevorzugte Einsatzbereiche für die Erfindung sind beispielsweise für folgende Dienstleister gegeben:
- Autowerkstätten
   Die Dienstleistung kann hierbei eine Werkstatt/Serviceleistung (z.B. Wartung oder Reparatur) und/oder die Entgegennahme eines Autos und/oder die Bereitstellung des Autos zur Abholung sein.
- Behörden (z.B. Kfz-Zulassung, Meldebehörde, Arbeitsamt)
- Messeveranstalter/Messeaussteller
   Die Dienstleistung kann z.B. ein Gespräch oder eine Präsentation auf einem Messestand sein.
- Kliniken/Ärzte
   Die Dienstleistung kann z.B. eine ambulante Behandlung sein ("virtuelles Wartezimmer").
- Flughäfen
   Die Dienstleistung kann z.B. das Einchecken sein.
- Personenbeförderungsunternehmen
   Die Dienstleistung kann z.B. die Aufnahme des Auftraggebers als Passagier eines Fahrzeugs sein.
- Versanddienste, z.B. Paketdienste
   Die Dienstleistung kann z.B. die Anlieferung einer Ware sein.
- Reinigungsbetriebe, z.B. für Textilien oder Fahrzeuge
- Handwerksbetriebe
- Verkaufsstätten
   Die Dienstleistung kann z.B. ein Beratungsgespräch und/oder Verkauf sein.

Die Erfindung wird nachfolgend anhand von Ausführungsbeispielen mit Bezug auf die beigefügten Zeichnungen weiter erläutert. In schematischer Weise stellen dar:
- Fig. 1: ein erstes Ausführungsbeispiel eines erfindungsgemäßen Terminierungsverfahrens, und
- Fig. 2: ein weiteres Ausführungsbeispiel eines erfindungsgemäßen Terminierungsverfahrens.

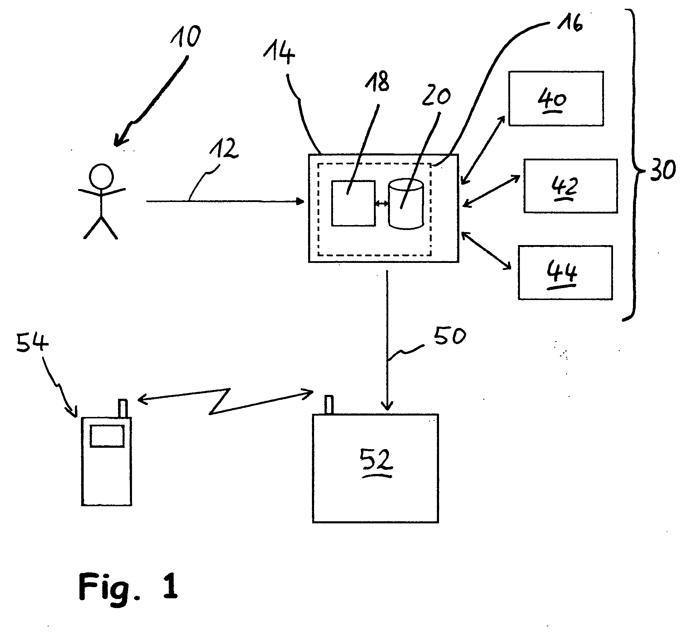

Fig. 1 veranschaulicht ein Verfahren zur Terminierung eines Warenkaufs mit Paketlieferung.

Ein Auftraggeber, hier eine Person 10, übermittelt einen Kaufauftrag (Pfeil 12) an eine hierfür vorgesehene zentrale Institution 14. Diese Zentrale 14 zur Entgegennahme von Aufträgen verfügt über eine zentrale Computersystem-Einheit 16, in die alle empfangenen Aufträge in elektronischer Form eingegeben werden. Die Einheit 16 umfaßt als wesentlichste Bestandteile eine Datenverarbeitungseinheit 18 und eine Datenbankeinheit (Speicher) 20, in der die Aufträge mit sämtlichen zugeordneten Auftragsdaten wie Identifizierung des Auftraggebers etc. gespeichert werden.

Die Computereinheit 16 der Auftragsannahme 14 steht über das Internet in Datenverbindung mit angeschlossenen Computersystem-Einheiten 40, 42 und 44 jeweiliger Dienstleister, von denen einer den Auftrag des Auftraggebers 10 ausführen wird. Die Auswahl des Dienstleisters erfolgt entweder durch den Auftraggeber 10 selbst (durch Angabe des gewünschten Dienstleisters im Auftrag) oder durch die Computereinheit 16 anhand der empfangenen Auftragsdaten. Im dargestellten Beispiel vermittelt die Bestellannahme 14 den Auftrag anhand der Auftragsdaten an einen geeigneten der Dienstleister bzw. deren angeschlossene Computer-Einheiten 40, 42, 44.

In der somit ausgewählten angeschlossenen Computer-Einheit (z.B. 42) wird die gewünschte Dienstleistung terminiert, d.h. ein zu erwartender Liefertermin für ein Paket festgelegt. Diese Terminierung erfolgt vollautomatisch basierend auf Daten zur Verfügbarkeit der gewünschten Ware, Daten betreffend mögliche und effiziente Auslieferungszeiträume und schließlich Daten betreffend den Zeitpunkt der Auftragserteilung (Logistik). Das Ergebnis dieses Terminierungsvorgangs wird von der angeschlossenen Einheit 42 in Form von Termindaten zurück zur zentralen Einheit 16 übermittelt und dort in der Datenbank 20 abgelegt. Mittels der Internetanbindung der Einheiten 40, 42, 44 kann eine erfolgte Terminierung auch revidiert werden und können geänderte Termindaten an die zentrale Einheit 16 zur Aktualisierung der Datenbank 20 übermittelt werden.

Die zentrale Computer-Einheit 16 bildet zusammen mit den angeschlossenen Computer-Einheiten 40, 42, 44 ein Computersystem 30, in das die empfangenen Aufträge eingegeben werden und in dem das automatische Terminieren der Dienstleistungen zur Erzeugung von Termindaten erfolgt.

Die erzeugten und in der Datenbank 20 abgelegten und gegebenenfalls aktualisierten Termindaten werden von dem Computersystem 30 (hier: der zentralen Einheit 16) zur Bereitstellung über ein Mobilfunknetz ausgegeben (Pfeil 50). Im dargestellten Fall erfolgt die Ausgabe an eine Mobilfunknachrichten-Zentrale 52 zur selektiven Verbreitung der Termindaten an die jeweiligen Auftraggeber, also zu einem jeweiligen Mobilfunkendgerät (hier: Mobiltelefon 54 des Auftraggebers 10). Um die erzeugten Termindaten selektiv verbreiten zu können, müssen die bei 50 ausgegebenen Termindaten jeweils die entsprechenden Mobilfunkidentifizierungen (Mobilfunkrufnummern) enthalten. Besonders bevorzugt ist es daher möglich, daß der Auftraggeber 10 seinen Auftrag mittels seines Mobilendgeräts 54 (z.B. als Mobilfunknachricht) an die Bestellannahme 14 übermitteln kann, da in diesem Fall dessen Mobilfunkidentifizierung für das Computersystem 30 unmittelbar verfügbar wird. In der dargestellten Ausführungsform können Auftraggeber ihre Aufträge jedoch zusätzlich in anderer Weise, insbesondere schriftlich, fernmündlich, per Internet (Online-Formular) abgeben. Bei derartigen Aufträgen gibt der Auftraggeber seine Mobilfunkidentifizierung an, die zusammen mit den übrigen Auftragsdaten als Auftragsdatensatz in der Datenbank 20 abgelegt wird. Falls die Zuordnung zwischen Auftraggeberidentifizierung und dessen Mobilfunkidentifizierung im System 30 dauerhaft gespeichert bleibt, ist es bei zukünftigen Aufträgen derselben Auftraggeber sogar möglich, auf die Angabe der Mobilfunkidentifizierung zu verzichten und stattdessen auf die gespeicherten Zuordnungen zurückzugreifen.

Die dem Auftraggeber 10 auf sein Mobiltelefon 54 in vorbestimmten Abständen (hier: täglich) übermittelten und gegebenenfalls aktualisierten Termindaten enthalten das voraussichtliche Lieferdatum inklusive ungefährer Uhrzeit für die gewünschte Paketlieferung. Somit wird der Auftraggeber 10 in komfortabler Weise über die Durchführung der von ihm beauftragten Dienstleistung informiert.

Gegebenenfalls können die Termindaten auch angeben, daß eine Terminierung nicht ohne weiteres möglich ist, beispielsweise wenn die gewünschte Ware vergriffen ist. In diesem Fall ist bevorzugt, daß in vorgestimmten zeitlichen Abständen (z.B. zwei Wochen) aktualisierte Termindaten von dem System 30 ausgegeben werden. Im Beispiel erhält dann der Auftraggeber 10 alle zwei Wochen eine aktuelle Information betreffend die Verfügbarkeit der gewünschten Ware. Sobald die Ware wieder verfügbar ist, enthalten die Termindaten wieder den ungefähren Lieferzeitpunkt.

Vor allem in der zuletzt dargestellten Situation, bei der der Termin unter Umständen nicht zeitnah zur Auftragsvergabe liegt, ist es fraglich, ob der Auftraggeber 10 den Termin noch nutzen möchte. In einer Ausführung des Verfahrens ist daher vorgesehen, daß zumindest in diesem Fall einer nicht ohne weiteres erfolgten Terminierung der Auftraggeber 10 den übermittelten Termin per Mobilfunknachricht bestätigen muß. Dies ist stets in sehr komfortabler Weise möglich, da auch die Aufforderung zur Auftragsbestätigung per Mobilfunknachricht erfolgt. In einer weiteren Ausführungsform ist vorgesehen, daß jeder Auftrag auf diese Weise vom Auftraggeber zu bestätigen ist. Diese Maßnahme ist insbesondere für Dienstleistungen zweckmäßig, bei denen der frühestmögliche Termin erfahrungsgemäß mehr als eine vorbestimmte Zeit, z.B. mehr als zwei Stunden nach der Auftragsvergabe liegt.

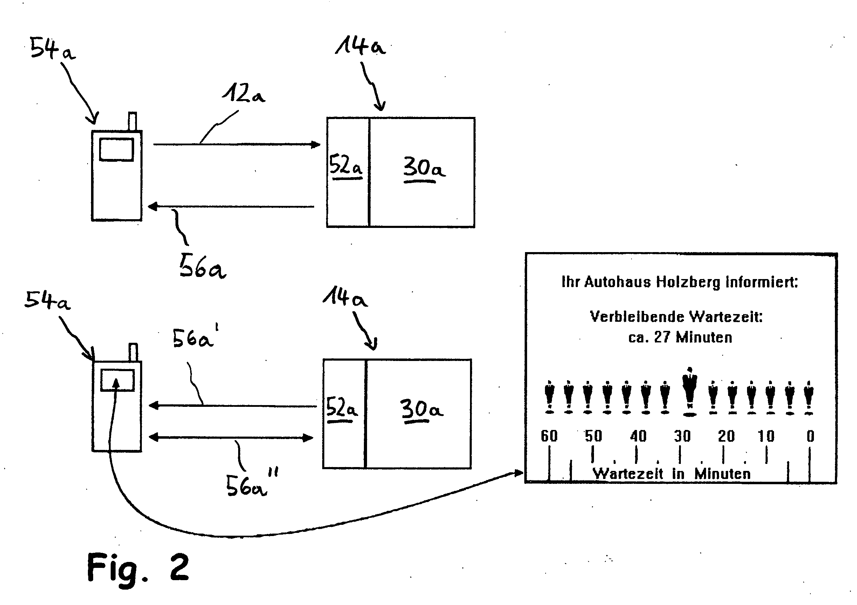

Nachfolgend wird ein weiteres Ausführungsbeispiel eines Terminierungsverfahrens mit Bezug auf Fig. 2 erläutert, wobei analoge Komponenten mit den gleichen Bezugszahlen bezeichnet sind und im wesentlichen lediglich auf die Unterschiede zu dem bereits beschriebenen Ausführungsbeispiel eingegangen wird.

Fig. 2 veranschaulicht die Terminierung von Dienstleistungen eines Autohauses, beispielsweise Pkw-Reinigung, Pkw-Inspektion, Pkw-Reparatur, etc.

Ein Kunde des Autohauses meldet sich per Mobiltelefon 54a (Anruf oder Mobilfunknachricht) bei dem Autohaus 14a an. Sodann erfolgt die automatische Terminierung der angemeldeten Dienstleistung mittels eines Computersystems 30a. Die erzeugten Termindaten, nämlich die Bestätigung der Anmeldung und die verbleibende Wartezeit, werden sogleich über ein angeschlossenes Mobiltelefon 52a an das Mobiltelefon 54a des Kunden zurück übermittelt (Pfeil 56a).

In Fig. 2 unten ist veranschaulicht, daß die Restwartezeit ständig oder in regelmäßigen Zeitabständen aktualisiert und zum Mobiltelefon 54a übermittelt wird (Pfeil 56a'), wobei in Fig. 2 rechts beispielhaft eine Display-Anzeige des Mobiltelefons 54a dargestellt ist. In diesem Beispiel sind die Termindaten als kombinierte Text/Graphikdaten vorgesehen, so daß dem Kunden neben der voraussichtlichen Wartezeit auch seine Position in der "virtuellen Warteschlange" mitgeteilt wird. Sowohl das Autohaus 14a als auch der Kunde hat die Möglichkeit, die Position in der Warteschlange zu beeinflussen. Wenn beispielsweise ein vor einem bestimmten Kunden terminierter Kunde nicht erschienen ist, aktualisiert das Computersystem 30a alle nachfolgenden Termine entsprechend, so daß sämtliche nachfolgenden Kunden um eine Position in der Warteschlange vorrücken. Alternativ kann vorgesehen sein, daß das Autohaus 14a über die Mobilfunkverbindung einem Kunden zunächst das Angebot unterbreitet, die Position in der Warteschlange zu verändern, z.B. vorzurücken. Für den Kunden kann gleichzeitig die Möglichkeit bestehen, die Anfrage zu stellen, ob man in der Warteschlange eine oder mehrere Positionen nach hinten rücken kann, um mehr Zeit zu haben. Derartige Anfragen und gegebenenfalls Bestätigungen veranschaulicht der Pfeil 56a".

Zusammenfassend bietet die Erfindung ein einfaches und komfortables System zur Festlegung von Terminen für gewünschte Dienstleistungen. Derjenige, der eine Dienstleistung (einschließlich Behördenleistung) in Anspruch nehmen möchte, kann sich beispielsweise von zu Hause aus unter einer speziellen Rufnummer einer Zentrale oder vor Ort per Mobiltelefon und einem speziellen Counter anmelden und sich. so in eine virtuelle Warteschlange einreihen. Ab diesem Zeitpunkt kann er über das Display seines Mobiltelefons jederzeit seine Wartezeit und Position in der Warteschlange überprüfen und die Zeit bis er "an der Reihe ist" überblicken. Auf diese Weise können Wartezeiten sinnvoll genutzt werden und die Zeit besser eingeteilt werden.

Zweckmäßigerweise sollte die Möglichkeit bestehen, die Warteschlange durch ein "Einchecken und Auschecken" von Wartenden zu verändern. Für eine weitgehend automatische Modifizierung der Warteschlange kann z.B. auf vorab eingegebene Erfahrungswerte betreffend durchschnittliche Wartezeiten pro Auftraggeber zurückgegriffen werden. Diese Erfahrungswerte können auch die Art des Auftrags bzw. der Dienstleistung berücksichtigen. Die Informationen werden beispielsweise per SMS oder als Graphik über UMTS an die Nutzer übermittelt. Diese Übermittlung bzw. Aktualisierung wie auch optionale Anfragen seitens Dienstleister oder Wartenden lassen sich in zukünftigen Mobilfunknetzen sehr kosteneffizient realisieren, da hierfür in der Regel eine permanente Online-Verbindung ohne Verbindungsaufbau und zu geringen Kosten je nach verschickter Datenmenge zur Verfügung steht. Erwähnenswert ist hierbei, daß die im Rahmen der Erfindung übermittelte Datenmenge äußerst gering ist.

## Patentansprüche

1. Verfahren zur Terminierung von Dienstleistungen, umfassend
- Empfangen (12) von jeweiligen Aufträgen zur Durchführung von Dienstleistungen,
- Eingeben der empfangenen Aufträge in eine in einem Computersystem (30) gespeicherte Datenbank (20) und automatisches Terminieren der jeweiligen Dienstleistungen mittels des Computersystems (30) zur Erzeugung von Termindaten, und
- Ausgeben (50, 52) der erzeugten Termindaten von dem Computersystem (30) zur Bereitstellung über ein Mobilfunknetz.

2. Verfahren nach Anspruch 1, wobei die Aufträge per Mobilfunknachricht (12a) empfangen werden können.

3. Verfahren nach Anspruch 1 oder 2, wobei die Aufträge über das Internet (12) empfangen werden können.

4. Verfahren nach Anspruch 1, 2 oder 3, wobei die Durchführung wenigstens eines Teils der Dienstleistungen die Anwesenheit des jeweiligen Auftraggebers (10) am Ort der Dienstleistung erfordert.

5. Verfahren nach einem der vorangehenden Ansprüche, wobei die Terminierung die zeitliche Reihenfolge der Empfänge (12, 12a) der Aufträge berücksichtigt.

6. Verfahren nach einem der vorangehenden Ansprüche, wobei die Terminierung wenigstens durch die Auftraggeber (10) beeinflußbar ist.

7. Verfahren nach einem der vorangehenden Ansprüche, wobei die Termindaten wenigstens die voraussichtlichen Wartezeiten enthalten.

8. Verfahren nach einem der vorangehenden Ansprüche, wobei die Termindaten als Mobilfunknachricht unter Verwendung von Mobilfunkrufnummem der Auftraggeber (10) bereitgestellt werden.

9. Computersystem (30) zur Durchführung eines Verfahrens nach einem der Ansprüche 1 bis 8.

10. Computersystem nach Anspruch 9, wobei das Computersystem eine verteilte Struktur dergestalt besitzt, daß in einer zentralen Einheit (16) die auszugebenden Termindaten gespeichert sind und in einer Mehrzahl von angeschlossenen Einheiten (40, 42, 44) die Terminierung der Dienstleistungen erfolgt.

11. Zentrale Einheit (16) für ein verteiltes Computersystem nach Anspruch 10.

12. Angeschlossene Einheit (40, 42, 44) für ein verteiltes Computersystem (30) nach Anspruch 10.

13. Verwendung eines Computersystems (30) nach Anspruch 9 oder 10, einer zentralen Einheit (16) nach Anspruch 11 bzw. einer angeschlossenen Einheit (40, 42 ,44) nach Anspruch 12 zur Durchführung eines Verfahrens nach einem der Ansprüche 1 bis 8.
